Europäisches Patentamt

European Patent Office

Office européen des brevets

(11) Publication number: **0 384 348 B1**

(12) **EUROPEAN PATENT SPECIFICATION**

(45) Date of publication of patent specification: **27.10.93**

(51) Int. Cl.⁵: **F23G 5/00**, F23G 5/46, B63B 35/44

(21) Application number: **90103137.7**

(22) Date of filing: **19.02.90**

(54) **A plant for incinerating trash on an offshore platform.**

(30) Priority: **24.02.89 IT 934989**

(43) Date of publication of application:
**29.08.90 Bulletin 90/35**

(45) Publication of the grant of the patent:
**27.10.93 Bulletin 93/43**

(84) Designated Contracting States:
**DE FR GR SE**

(56) References cited:
**EP-A- 0 193 628**
**CH-A- 566 518**
**CH-A- 575 101**

**PATENT ABSTRACTS OF JAPAN vol. 4, no. 96 (M-20)(578) 11 July 1980, & JP-A-55 56513 (NOBORU NISHIDA) 25 April 1980**

**G.V. Hooper (editor): "Offshore Ship and Platform incineration of Hazardous Wastes" 1981, Noyes Data Corporation, Park Ridge, New Jersey**

(73) Proprietor: **ALCATEL ITALIA S.p.A.**
**Via Monte Rosa 15**
**I-20149 Milano(IT)**

(72) Inventor: **Andreini, Guido**
**Via O. Da Pordone 36**
**Firenze(IT)**

(74) Representative: **Weinmiller, Jürgen**
**Lennéstrasse 9**
**Postfach 24**
**D-82336 Feldafing (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

EP 0 384 348 B1

## Description

The invention relates to a plant for incinerating trash.

How to get rid of trash is a problem of difficult and expensive solution and with heavy ecological and hygienic implications.Among the proposed solutions,the use of surveyed dumps represents a transitory solution of limited effectiveness,which implies an unfavourable environmental impact.Indeed,the eventual re-use of a land set aside as a dump is not possible before fifty years after its saturation,with disagreable environmental results.

Trash recovery and recycling requires a complex collecting and treatment organization,at present not available.In any case,recycling does not afford a global solution of the problem.

From a technical viewpoint,among the solutions nowadays adopted to face the problem of trash elimination,the soundest seems to be incineration.On the other hand,the presence of an incinerator in proximity of built-up areas proved to be inconvenient and unwelcome,also when the incinerator is realized with all possible warrants for public welfare.

The location of built-up areas in sites having often a low air circulation (plains, alluvion valleys, glacial valleys) makes the presence of an incinerator, with its powder and fumes emission, as an aggravating element within the limits of an environmental situation made already problematic by the presence of traffic exhaust gases and industrial emmissions.

It is known from document JP-A-55 56513 to provide an offshore platform mounted on posts with an incinerating furnace for burning wastes. However the handling of wastes necessitates a cargo-machine to take the wastes from a boat and to throw it into the furnace. This document does not disclose means permitting an easy handling of the wastes.

Document CH-A-566518 discloses a ship comprising an incinerating furnace permitting an offshore burning of the wastes. However, the handling of the wastes from and to the ship cannot also be realised efficiently.

The object of the present invention is to realize an incinerating plant which overcomes the above referred drawbacks.

Substantially, the invention proposes an offshore platform for incinerating trash of the type comprising incinerating means and being supplied by ships, this platform being intented for remaining offshore and floating on water and anchorable to the bottom of the sea and comprising:

- at least one conveyor on which closed containers containing the trash are conveyed from at least one ship, and
- crane means which move these containers from the conveyor to at least one storage area on the platform and vice versa, and
- conveyors means extending in parallel with a front of trash combustion, fumes treatment and heat recovery modules, for delivering filled containers to these modules and/or picking off empty containers from these modules, after the emptying of their contents into the modules.

The plant according to the invention has the following advantages,substantially due to its off-shore location :

- as being floating and towable it may be located where necessary and also displaced according to specific requirements;
- as being off-shore and therefore in a area exposed to winds of particular intensity,and anyway subjected to the daily alternation of breeze,allows an ideal fumes dispersion;
- the deposition cone of solid particles never interferes with build-up areas;
- trash can be collected into containers,which are closed immediately after the gathering,and open only when said trash must be discharged into the incinerator, with remarkable and easily intuitable hygienic and sanitary advantages.

The plant may be equipped with means suitable for loading and unloading the containers,and for handling them.In the appended claims,some preferential embodiments of said means are described.

According to a practical embodiment,the trash combustion modules,forming a portion of the plant,can be associated to steam production boilers;the steam may be employed in different ways to produce electric power for self-maintenance of the plant.In particular,according to a possible embodiment,the steam can be directly used in turbine groups,associated to said plant,for direct production of electric power satisfying the needs of the plant itself.According to a modified version of the embodiment,the steam generated by the trash combustion is directed to one or more turbine groups of a thermal power plant combined with said incinerating plant;in this case the thermal power plant supplies electric power for the power distribution line,in addition to power necessary for maintaining the incinerating plant.In this embodiment,the surplus of electric power generated by the incinerating plant,in comparison with the energy required for its maintenance,can be advantageously exploited to produce electric power to be sent in the power distribution line.Besides,the incinerating plant is more simple and economical,in that turbine group,dedicated solely to electric power needs,are not necessary.In this case,other plants and apparatuses may be common to the incinerating plant and thermal power plant,with a saving in plant costs.Among these plants and apparatuses,we could mention those related to containers lighting and handling, which can be exploited to carry both the cinders of the incinerator and thermal power plant,the electric fans blowing on the comburent air,the electrostatic filters for fumes cleaning.Also the mooring means,and for unloading and loading materials,in addition to maintenance services,can be common to the thermal power plant and incinerating plant.

The disclosure will be better understood in conjunction with the description and the attached drawing,which illustrates a practical,not limitative example of the invention itself.

In the drawing,

Fig. 1 is a plan schematic view of the plant platform according to the invention,

Fig 2 illustrates a detail of zone for ships mooring and loading/unloading containers;

Fig. 3 shows a schematic section of an incinerating unit to be used in a plant according to the invention,

Fig. 4 shows a block diagram of the incinerator in fig. 3,

Fig. 5 shows,in a block diagram,the energy and mass balance of the plant according to a first embodiment,

Fig. 6 shows, likewise Fig.5,a block diagram of energy and mass balance of the plant according to a second embodiment, and

Fig.7 and 8 show schematically,in a lateral view,two possible means for collecting and compacting trash into containers.

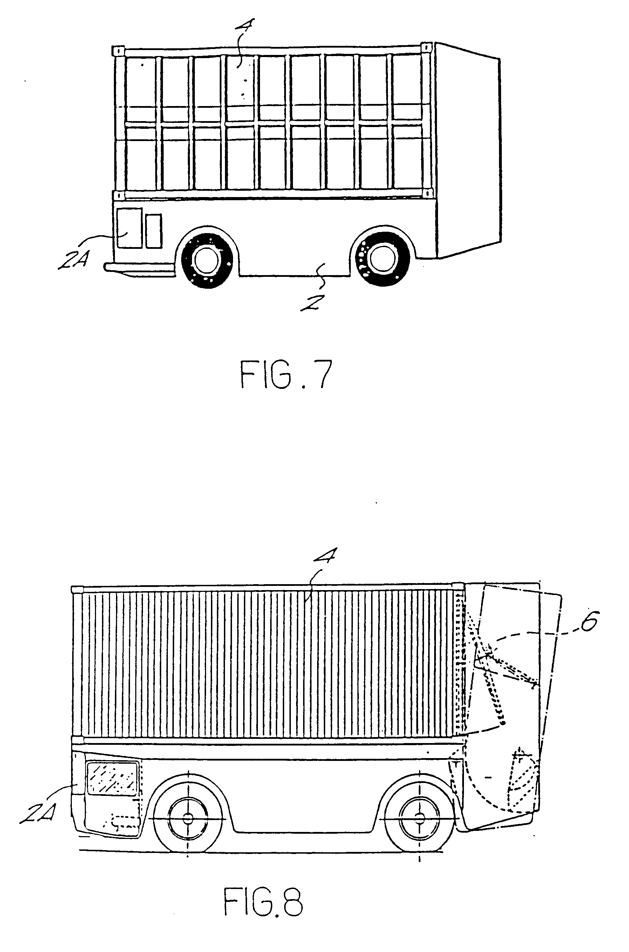

According to the invention,trash is collected by special pre-existent collecting means which provide for collecting and compacting trash into containers,and then to convey these latter up to goods yard for subsequent delivery to the harbour where they will be embarked on adequate containercarrier ships.In Fig.7 and 8,two special trash collecting means have been schematically illustrated.They include a vehicle with a lowered driver's cab 2A,on which a container 4,filling and compacting means 6 are arranged.These means can,when the roadway allows it,directly circulate in built-up areas to collect trash.The containers,once full of compacted trash,are conveyed by the same vehicles 2 to the goods yard where they are loaded on carriages which carry them up to the port of loading.When the collecting area is near to the port of loading - for instance in case of coastal town furnished with an adequate harbour structure-railway transport may be avoided and containers can be transferred directly from collecting means into the containercarrier ships.

The embarked containers are carried up to an offshore platform,on which is located the incinerating plant and where the unloading of the containers themselves takes place.

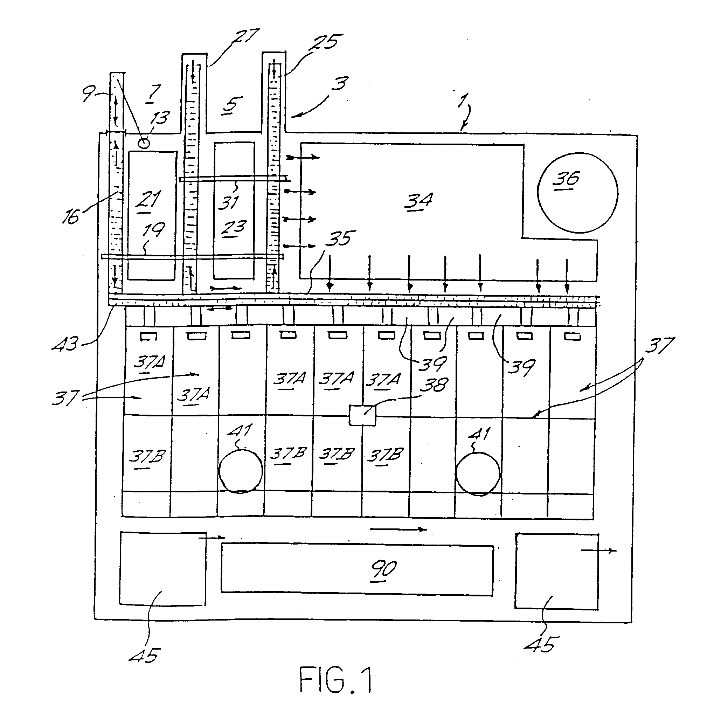

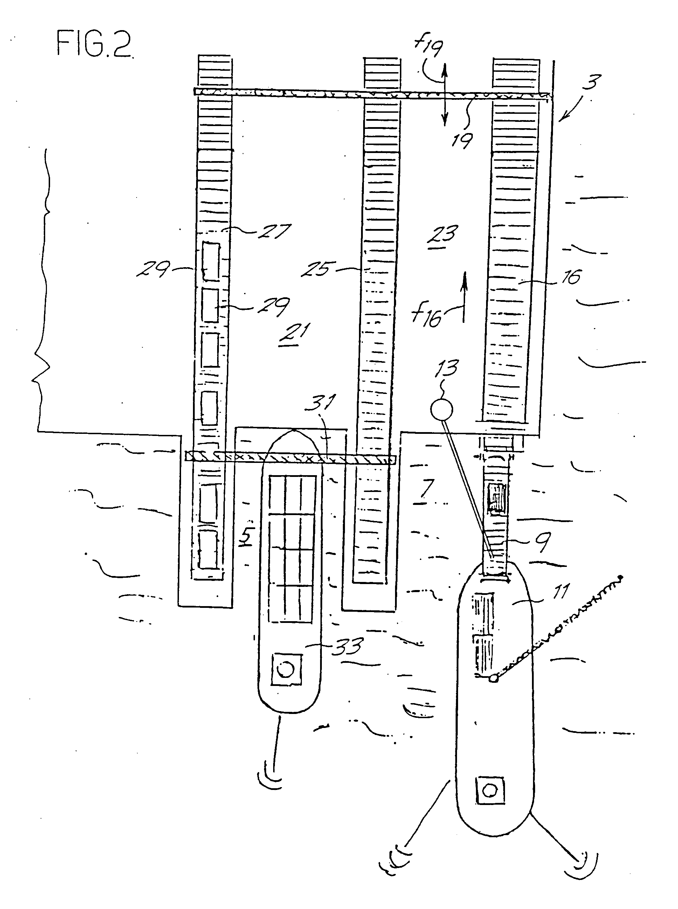

As illustrated in the attached drawing and, in particular,with reference to Fig.1,a plant according to the invention is realized on an offshore platform designed as a whole by reference numeral 1. The plant includes a mooring zone 3 for unloading containers filled with compacted trash,and for loading empty containers and/or containers containing trash combustion cinders. Said zone 3,shown in greater details in Fig.2,includes a section 5 for mooring,unloading and loading in of calm sea condition,and a section 7 for mooring,unloading and loading in heavy sea condition.This second section includes a conveyor belt 9 moorable to the containercarrier ship-schematically indicated by reference numeral 11 in Fig.2 - and steerable through a column crane 13.The conveyor belt 9 is connected to platform 1 so as to swing both along a vertical plane and the plane of the belt itself,in relation with a connection point to the platform.This enables belt 9 to follow the movements of the ship caused by sea conditions.

The containers are routed on conveyor belt 9 by ship crane 11,and are discharged by this belt on a power-driven roller conveyor 16, which moves the containers in the direction of arrow 16.Along the conveyor 16 moves,according F19,a bridge crane 19 which picks up the containers discharged on conveyor 16 and lays them down on one of two container warehouses provided in the unloading and loading zone and indicated,respectively, by refecence numerals 21 and 23.

When the sea is calm,unloading and loading operations may be performed in section 5 of zone 3,where a pair of power-driven roller conveyors 25,27 is provided,on which the containers 29 are laid down by a bridge crane 31,which picks them off the containercarrier ship,in this case indicated by reference numeral 33.

During the unloading operations,the bridge crane 31 stays at the ship 33 and lays down the containers 29 on conveyors 25,27 which remove them from unloading area.In this way,the unloading operations prove to be very fast and can be performed with a limited staff.

At the end of unloading and loading operations,or during the same,the bridge crane 19 may pick up the containers from roller conveyors 25,27 and lays them down on storage areas 21,23. At the end of unloading operations,the bridge crane 31 can also provide for unloading the containers, still arranged on conveyors 25,27,onto the storage area 21.The arrangement of unloading means is such that relevant operations are made very fast and practicable by a very limited staff.

At the side of zone 3,there is provided a further area 34 for storage and collecting containers filled with trash and/or empty containers to be brought back ashore for a subsequent use,and/or containers filled with cinders which have to be brought ashore for re-use.At the side of area 34 or in another suitable zone,an heliport 36 may be foreseen.

In front of conveyors 16,25,27 and collecting area 34,there are means 34 for handling containers coming from the same conveyors and/or storage areas 21,23,34 up to incinerating units (ten in the drawing) designed as a whole by reference numeral 37.The containers are discharged in correspondance with incinerating modules 37 and opened in a corresponding opening zone 39 in order to enable the unloading of their contents into the incinerator hopper,described below in greater details.

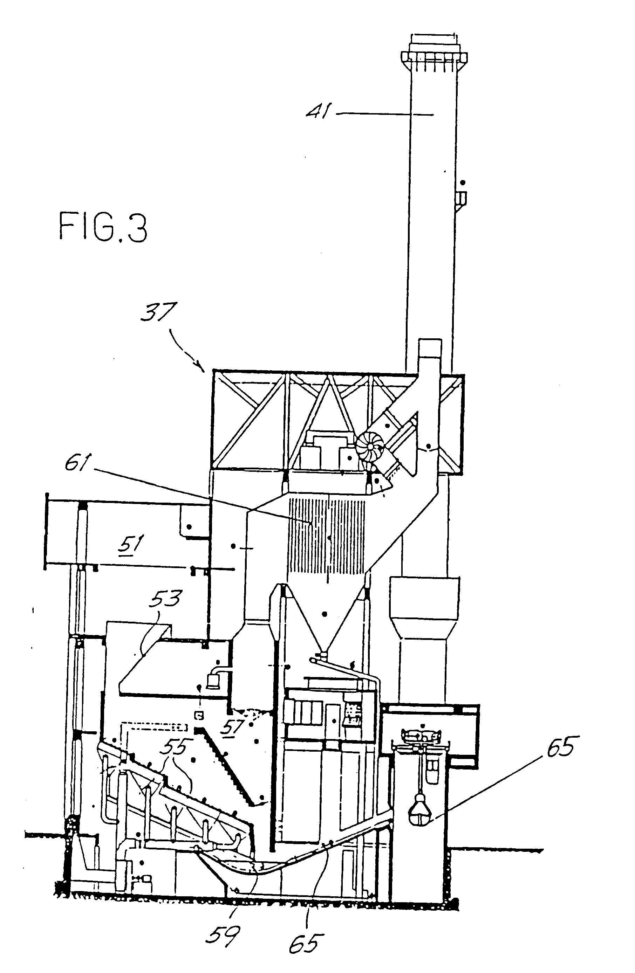

Each incinerating module or unit 37 comprises a zone 37A where the combustion chamber is arranged and a zone 37B for cleaning fumes and fumes wash waters;fumes are then collected and discharged via a pair of chimneys 41,each of which disperses the fumes of five incinerating modules 37,whereas wash waters are discharged into the sea after cleaning. Ashes and cinders are collected,as described in greater details in the following with reference to fig.3,and let into containers which are piled in one of three collecting areas 21,23, 24 to be successively embarked and brought back ashore, where they are variously used.For conveying the containers filled with cinders, there are carrier means 43 parallel to carrier means 35 for containers full of trash to be incinerated.The same carrier means 43 can be used for conveying empty containers.Indeed,only about 10% of unloaded trash containers are filled with solid combustion residuals,whereas 90% of remaining containers has to be brought back empty for the successive use.

The loading operations of empty containers and/or cinder containers on the containercarrier ships 11 or 33 are performed,after the complete unloading of these latter,with the same means and procedures already described for discharge operations.

On the platform illustrated in Fig.1,further cinder containers storage areas 45 are provided.The dimensioning of storage areas 21,23,34,45 is such to give the incinerating plant a sufficient autonomy,for instance of two or three days,in case the sea conditions do not afford containercarrier ships mooring.

The illustrated plant is subdivided into ten self-sufficient modules having in common only the fumes evacuation and material loading and unloading plants,as well as the apparatuses exploiting the thermal energy generated by combustion.This thermal energy may be variously exploited as will be explained in greater details in the following.The whole plant may be surveyed by a control tower 38 located centrally on platform 1,at the top of the plant itself.

In Fig.3 is shows a plan section view of an incinerating module 37 usable in the plant according to the invention.The containers are picked off by the carrier means 35 (or 43),lifted up and then arranged on a plane 51 from which their contents is discharged into a loading hopper 53 of the ovens.Lifting up to plane 51 can be performed by a sole lifting means, movable along the whole front of incinerating modules.The direct trash discharge into the hopper 53 allows to exclude the presence of a trash collecting pit,which is a characteristic of conventional land plants.The material to be incinerated is,in this case,treated as combustible in unified "doses" to be let into the plant,each dose (which is completely let into a single module 37) being represented by a standardized container.These trash treatment procedures exclude at most the exhalations,the presence of parasites, rodents,and the flocking of seagulls,which may cause heavy hygienic problems.

The discharged containers are not washed in site for practical reasons,but in a special ashore plant which can be unified with the containers embarkment area or located near to trash collecting centers.

Trash discharged into the hopper 53 reaches drying and combustion grids 55,and fumes move then into an afterburning zone 57,whereas cinders are collected at 59.Fumes coming from afterburning zone 57 are conveyed,via an electrostatic filter 61,and via an upstream water wash zone,up to dispersion chimney 41.Appropriate cinders collecting and handling means 65 enable the combustion cinders loading into the containers.

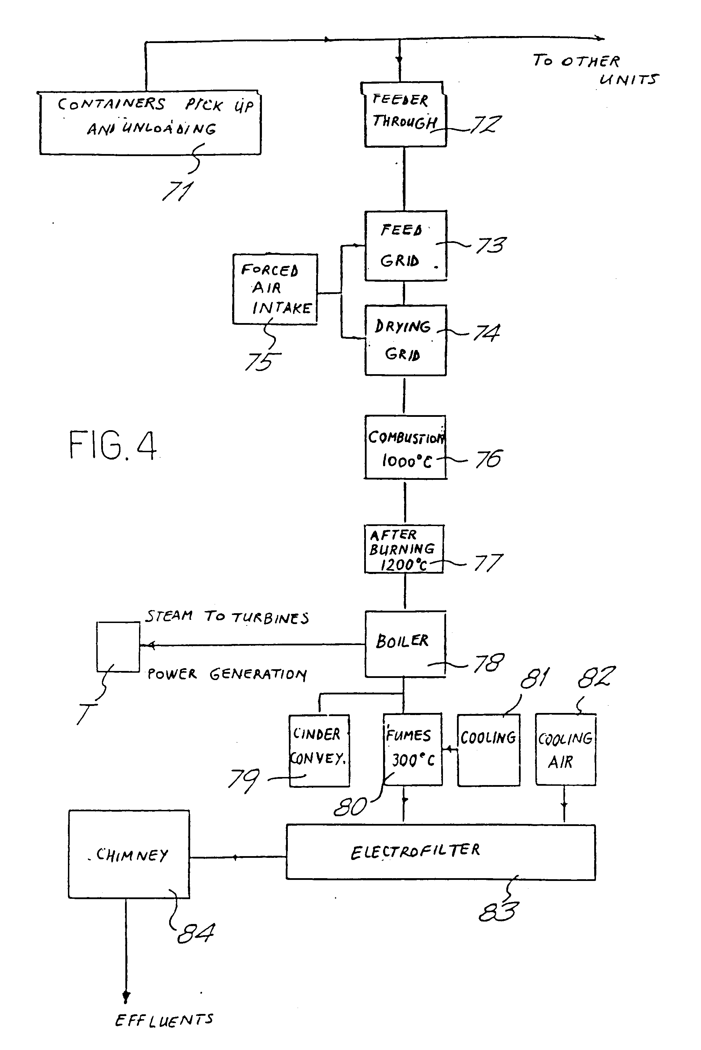

In fig.4 is shown a block diagram of cinder combustion treatment in the incinerating tower schematically illustrated in Fig.3.The containers are picked up and emptied (block 71) and the contents discharged into the hopper (block 72);trash is conveyed from the hopper onto the feed and drying grid (blocks 73,74) where it is dried by forced air intake (block75).The dried solid residuals are burnt (block 76,where is indicated a combustion temperature of 1000 C,which is not limitative),and fumes sent to afterburning (block 77);yet in this case the indicated temperature of 1200°C is to be considered as a not limitative example.

Inside a boiler,fumes generate steam (block78) which is let into turbines (block T) for generating electric power,as will be referred in the following. The solid cinders are conveyed to the containers (block 79) and fumes are cooled,sent to the electrofilter and then to the atmospheric dispersion chimney (blocks 79,80,81,82,83,84).

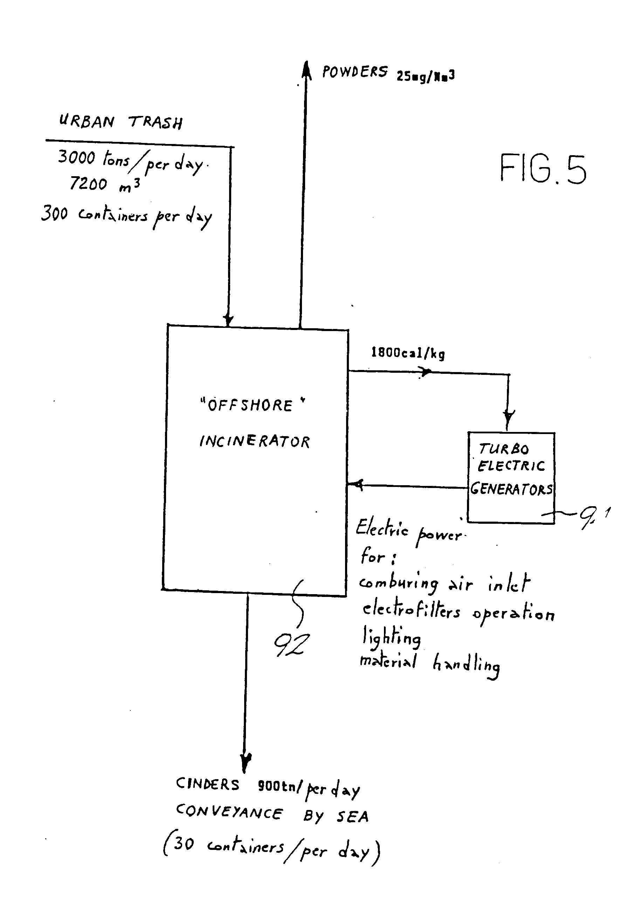

In Fig.5 is illustrated,the indicative energy and mass balance of an incinerator 92 capable to dispose everyday 3000 tons of urban solid trash,equal to trash produced by 2,5 millions of inhabitants.This trash quantity,suitably compacted,can be handled daily by 300 containers.Cinders,amounting to 900 tons everyday,fill up a volume equal to,approximately,10% of corresponding volume of trash which produced them and,therefore, can be handled daily by 30 containers.25mg/Nm$^3$ of powders are dispersed into the atmosphere.

Trash combustion produces 1800 Kcal/kg thermal energy exploited for generating electric power.In the diagram of fig.5,this thermal energy is exploited for generating steam which,running into special turbines associated to electric generators 94,produces the electric power needed for whole plant operation.

In particular,the generated power is used for forced intake of drying and comburing air (which may be preheated if necessary) into the incinerator,for fans and electrofilters operation,for feeding and treatment of waters for washing and cleaning of fumes,for lighting and heating and for materials handling,namely for conveyors and cranes feeding.The turbine groups are housed in a special plant area,schematically indicated by reference numeral 90 in Fig.1.In the attached schedule,data concerning the areas and the weights of a plant of described type,having a capacity of 3000 tons/per day,are reported.In said schedule are indicated the extensions of six areas,referred as A,B,C,D,E and F,and the weights of the plants and materials located in said areas.All the indicated dimensions are exclusively given by way of example.

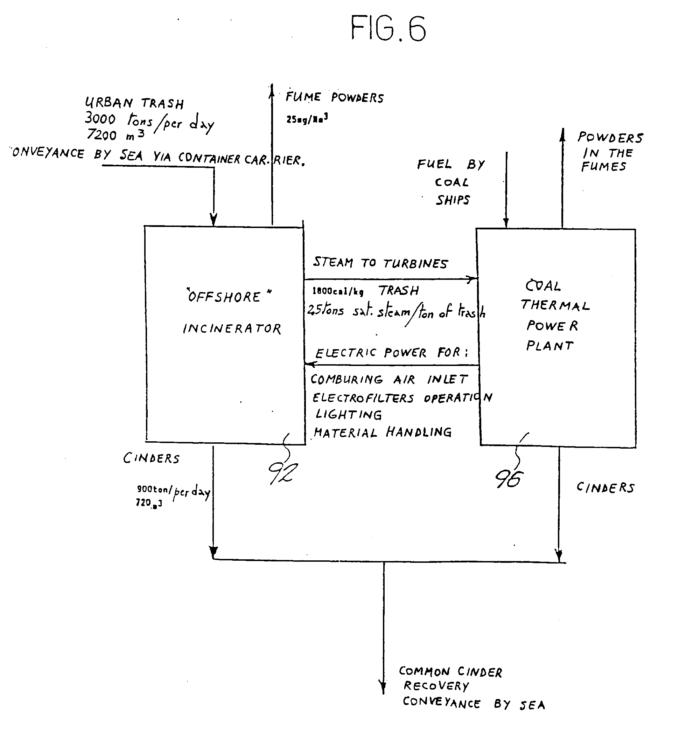

The above described plant can be joined to a thermal power plant on an off-shore platform,with which it exchanges energy in the form of steam and electric power. In Fig.6 is shown a chart which illustrates,schematically,the energy balance of an incinerating plant according to the disclosure - indicated by 92 - combined with a coal thermal power plant designed as a whole,by reference numeral 96.The capacity of the incinerating plant,in the case illustrated in Fig.6,is the same of the plant to which the chart of fig. 5 refers.In this case,the solid urban trash combustion produces 2.5 tons of saturated steam for each ton of burnt trash.This steam is let into turbines associated to the steam thermal power plant, which actuate respective alternators for the generation of electric power which is put on the power distribution line.

A part of this electric power is picked off for incinerating plant operation.The combustion cinders of coal and solid urban trash can be carried back together, by sea,up to ashore plants for re-use.

The integration of two plants, the incinerator and the thermal power plant, allows a save of steady plants.

## Schedule 1

### GENERAL PLANTS DIMENSIONING

#### PLATFORM AREAS

A — TOTAL PLATFORM USEFUL AREA          34.000 SM

B — INCINERATOR PLANT AREA          12.000 SM

C — CLEAR AREA FOR PASSAGES AND HELIPORT   12.800 SM

D — DEPOSIT, LOADING AND UNLOADING AREA    7.300 SM

E — HANDLING PLANTS AREA          200 SM

F — AREA FOR BUILDING GENERATORS,

     ACCOMODATIONS, SERVICES          1.700 SM

#### PLANTS, MATERIALS AND EMPTY PLATFORM WEIGHTS

A — TOTAL WEIGHT OF PLATFORM STRUCTURE (WITHOUT

     PLANTS, BUILDINGS, SERVICES, MATERIALS AND

     PACKINGS)          12.000 tons

B — PLANTS WEIGHT AREA B          22.000 tons

C — PLANTS WEIGHT AREA C          negligible

D — MAXIMUM WEIGHT OF STORED MATERIAL    7.300 tons

     AREA D

E — HANDLING PLANTS WEIGHT          200 tons

F — BUILDING AND PLANTS WEIGHT AREA F    3.500 tons

G — TOTAL WEIGHT LOADING UPON PLATFORM STRUCTURE

     (PLANTS, BUILDINGS, SERVICES, MATERIALS,

     PACKINGS)          33.000 tons

H — TOTAL WEIGHT OF PLATFORM STRUCTURE WITH MAXIMUM

     LOAD OF PLANTS, BUILDINGS, SERVICES,

## Claims

1. An offshore platform for incinerating trash of the type comprising incinerating means and being supplied by ships, characterized in that it is intended for remaining offshore and floating on water and anchorable to the bottom of the sea and comprises:
   - at least one conveyor (16,25,27) on which closed containers containing said trash are conveyed from at least one ship (11,33), and
   - crane means (19,31) which move said containers from said conveyor (16,25,27) to at least one storage area (21,23) on the platform and vice versa, and
   - conveyors means (35,43) extending in parallel with a front of trash combustion, fumes treatment and heat recovery modules (37), for delivering filled containers to said modules (37) and/or picking off empty containers from said modules (37), after the emptying of their contents into said modules (37).

2. An offshore platform according to claim 1, characterized in that it also comprises one conveyor (9) anchorable to a ship (11) and which handles the containers from said ship (11) to one (16) of said steady conveyors of said platform.

3. An offshore platform according to claim 2, characterized in that said anchorable conveyor is constituted by a conveyor belt (9) bound to said platform in such a way that two degrees of freedom are allowed, said conveyor belt (9) being associated with crane means (13) for its motion and positioning on said ship (11) to which the conveyor belt (9) itself has to be moored.

4. An offshore platform according to one of the claims 1 to 3, characterized in that said trash combustion modules (37) are associated to a boiler for steam generation, said steam being exploited for electric power generation, at least for self-maintenance of said platform.

5. An offshore platform according to one of the claims 1 to 4, characterized in that it comprises a storage area (34) for stock formation of trash to be incinerated and one storage area (45) for piling containers filled with combustion cinders.

## Patentansprüche

1. Offshore-Plattform zum Verbrennen von Abfall, die Einrichtungen zum Verbrennen aufweist und von Schiffen versorgt wird,
   **dadurch gekennzeichnet,** daß sie zum schwimmenden Aufenthalt auf See vorgesehen und verankerbar auf dem Grund der See ist und folgendes aufweist:
   - mindestens einen Förderer (16, 25, 27), auf dem geschlossene Behälter mit dem Abfall von mindestens einem Schiff (11, 33) befördert werden,
   - Kräne (19, 31), die die Behälter von den Förderern (16, 25, 27) zu mindestens einem Speicherbereich (21, 23) auf der Plattform und zurück bringen und
   - Fördermittel (35, 43), die parallel zur Front von Abfallverbrennungs-, Rauchbehandlungs- und Wärmerückgewinnungsmodulen (37) angeordnet sind und die die gefüllten Behälter zu den Modulen (37) bringen und/oder leere Behälter nach dem Ausleeren ihres Inhaltes in die Module von den Modulen aufnehmen.

2. Offshore-Plattform nach Anspruch 1, dadurch gekennzeichnet, daß sie auch einen Förderer (9) aufweist, der an einem Schiff (11) verankerbar ist und der die Behälter vom Schiff (11) zu einem Fördermittel auf der Plattform bringt.

3. Offshore-Plattform nach Anspruch 2, dadurch gekennzeichnet, daß der Förderer (9) aus einen Förderband gebildet und an die Plattform derart angebunden ist, daß zwei Bewegungsgrade möglich sind, und daß das Förderband (9) mit Kranmitteln (13) für seine Bewegung und Positionierung am Schiff (11) versehen ist, an dem das Förderband (9) selbst zu vertäuen ist.

4. Offshore-Plattform nach einem der Ansprüche 1 - 3, dadurch gekennzeichnet, daß die Verbrennungsmodule (37) einen Boiler zur Dampferzeugung aufweisen, wobei der Dampf zur Stromerzeugung zumindest für die Selbstversorgung der Plattform dient.

**5.** Offshore-Plattform nach einem der Ansprüche 1 - 4, dadurch gekennzeichnet, daß sie einen Speicherbereich (34) zur Aufnahme des zu verbrennenden Abfalls und einen Speicherbereich (45) zum Stapeln von mit Verbrennungsasche gefüllten Behältern aufweist.

## Revendications

**1.** Une plate-forme marine pour l'incinération des déchets, du type comprenant des moyens d'incinération et alimenté par bateaux, caractérisée par le fait qu'elle est destinée à rester en mer et à flotter sur l'eau et qu'elle est ancrable au fond de la mer et est constituée de :
- au moins un transporteur (16, 25, 27) sur lequel des conteneurs fermés contenant lesdits déchets sont transportés à partir d'au moins un bateau (11, 33), et
- des moyens de levage (19, 31) qui transportent lesdits conteneurs dudit transporteur (16, 25, 27) jusqu'à au moins une zone de stockage (21, 23) sur la plate-forme et vice versa, et
- des transporteurs (35, 43) courant parallèlement à un front de modules de combustion des déchets, de traitement des fumées et de récupération de chaleur (37), pour délivrer les conteneurs pleins auxdits modules (37) et/ou reprendre lesdits conteneurs vides sur lesdits modules (37) après vidage de leur contenu dans lesdits modules (37).

**2.** Une plate-forme marine selon la revendication 1, caractérisée par le fait qu'elle comporte aussi un transporteur (9) amarrable à un bateau (11) et assurant la manutention des conteneurs dudit bateau (11) jusqu'à un (16) desdits transporteurs fixes de ladite plate-forme.

**3.** Une plate-forme marine selon la revendication 2, caractérisée par le fait que ledit transporteur amarrable est constitué par un transporteur à bande (9) lié à ladite plate-forme de manière à permettre 2 degrés de liberté, ledit transporteur à bande (9) étant associé à un moyen de levage (13) assurant le déplacement et le positionnement dudit bateau (11) auquel le transporteur à bande (9) a lui-même été amarré.

**4.** Une plate-forme marine selon l'une des revendications 1 à 3, caractérisée par le fait que lesdits modules de combustion de déchets (37) sont associés à une chaudière pour produire de la vapeur, ladite vapeur étant exploitée pour produire de l'électricité, au moins pour faire face aux besoins de ladite plate-forme.

**5.** Une plate-forme marine selon l'une des revendications 1 à 4, caractérisée par le fait qu'elle comprend une zone de stockage (34) pour constituer un stock de déchets à incinérer et une zone de stockage (45) pour gerber les conteneurs remplis de scories de combustion.

FIG.1

FIG.2

FIG.3

TO OTHER
UNITS

CONTAINERS PICK UP
AND UNLOADING
71

FEEDER
THROUGH 72

FEED
GRID 73

FORCED
AIR
INTAKE
75

DRYING
GRID 74

FIG.4

COMBUSTION
1000°C 76

AFTER
BURNING
1200°C 77

STEAM TO TURBINES

BOILER
78

POWER GENERATION

T

81    82

CINDER
CONVEY.
79

FUMES
300°C
80

COOLING

COOLING
AIR

CHIMNEY

ELECTROFILTER

83

84

EFFLUENTS

POWDERS 25mg/Nm3

URBAN TRASH

3000 tons/per day.
7200 m³
300 containers per day

FIG.5

"OFFSHORE"

INCINERATOR

1800cal/kg

TURBO
ELECTRIC
GENERATORS

91

Electric power
for :
comburing air inlet
electrofilters operation
lighting
material handling

92

CINDERS 900tn/per day
CONVEYANCE BY SEA
(30 containers/per day)

# FIG.6

URBAN TRASH
3000 tons/per day
7200 m³
ONVEYANCE BY SEA VIA CONTAINER CAR.RIER.

FUME POWDERS
25mg/Nm³

POWDERS
IN THE
FUMES

FUEL BY
COAL
SHIPS

"OFFSHORE"

INCINERATOR

STEAM TO TURBINES

1800cal/kg TRASH
2.5 tons sat. steam/ton of trash

ELECTRIC POWER FOR:

COMBURING AIR INLET
ELECTROFILTERS OPERATION
LIGHTING
MATERIAL HANDLING

COAL
THERMAL
POWER
PLANT

92

96

CINDERS

900 ton/per day
720 m³

CINDERS

COMMON CINDER
RECOVERY
CONVEYANCE BY SEA

FIG.7

FIG.8